# EUROPEAN PATENT SPECIFICATION

(11) **EP 1 350 688 B1**
(45) Date of publication and mention of the grant of the patent: **02.11.2005**
(21) Application number: 03006166.7
(22) Date of filing: 19.03.2003
(51) Int. Cl.: B60R 21/16

(54) **Airbag module with partial external hood or tether**
Airbagmodul mit teilweiser äusserer Haube oder Bewegungsbegrenzungseinrichtung
Module de sac gonflable en partie recouvert d'une capote ou d'un dispositif de limitation de mouvement

(30) Priority: 06.04.2002 US 370789 P
(43) Date of publication of application: 08.10.2003
(73) Proprietor: KEY SAFETY SYSTEMS, INC., Sterling Heights, Michigan 48314 (US)
(72) Inventor: Cooper, John, Oxford, Michigan 48371 (US); Burdock, M. John, St. Clair Shores, Michigan 48081 (US); Jung, Jin Ho, Rochester Hills, Michigan 48307 (US); Arwood, Robert L. III, Fraser, Michigan 48026 (US); Sadenwater, Robert J., Clarkston, Michigan 48348 (US); Green, Walter R., Pontiac, Michigan 48340 (US); Shkoukani, Mutaz A., Fraser, Michigan 48026 (US); Blancou, Jean-Luc, Troy, Michigan 48084 (US)
(74) Representative: Gislon, Gabriele

(56) References cited:
- US-A- 5 364 124
- US-A- 5 765 867
- US-A- 6 164 696
- PATENT ABSTRACTS OF JAPAN vol. 1995, no. 06, 31 July 1995 (1995-07-31) -& JP 07 069149 A (TAKATA KK), 14 March 1995 (1995-03-14)

## Description

The present invention generally relates to an airbag assembly that optimizes the interaction of airbags with vehicle occupants who are seated in what is referred to in the art as being in an out-of-position seating position.

JP 07069149 (TAKATA KK) discloses a tether in the form of a tape sewn to a fold of the airbag; this tape-tether does not envelope a side of the airbag and is not pushed off the same upon its inflation. Actually the tether of this document is configured to be ruptured, upon inflation, in two parts, one of which remains secured to the airbag.

US-A-6164696 relates to an airbag having holding means consisting in tear seams that are destroyed upon its inflation. Alternatively, a tab sewn to the airbag is provided, this tab being destroyed, too, upon airbag inflation.

US-A-5364124 relates to an airbag assembly according to the preamble of claim 1 where an open bag (chute) is used to completely envelope the inflatable air bag. The enveloping bag also needs a tab or tether (56) to direct the inflating air bag to the required direction until the inflated air bag causes the envelope bag to slide down and completely free the air bag.

The subject-matter of the invention is defined by claim 1.

The preferred embodiment of the present invention incorporates an external tether or hood spanning approximately one-third to about one-half the width of a folded airbag. The tether slows the motion of one-half of the airbag and urges or re-directs the airbag to inflate away from the partial tether toward a preferred initial trajectory. This construction advantageously assists in protecting an occupant that is seated in what would be considered an out-of-position seating orientation. During the initial moments of inflation, the symmetric inflation of the airbag is retarded by a partial tether. As the airbag more fully inflates, the partial tether is pushed to the side, permitting the airbag to inflate more symmetrically.

### BRIEF DESCRIPTION OF THE DRAWINGS

FIG. 1 shows an exploded view of an inflator and an airbag.
FIG. 2 shows a cross-sectional view of the airbag folded about the inflator.
FIG. 3 shows a top plan view of an airbag and inflator of FIG. 2.
FIG. 4 illustrates an isolated view of an external tether.
FIG. 4a shows a panel of airbag material used to make the tether.
FIG. 4b shows an alternate embodiment of the invention.
FIG. 5 shows a folded external tether positioned upon a folded airbag.
FIG. 5a shows the external tether positioned relative to a folded airbag; the external tether is shown in an active position for the purpose of illustration.
FIGs. 6 and 7 illustrate the operation of the present invention.

### DETAILED DESCRIPTION OF THE INVENTION

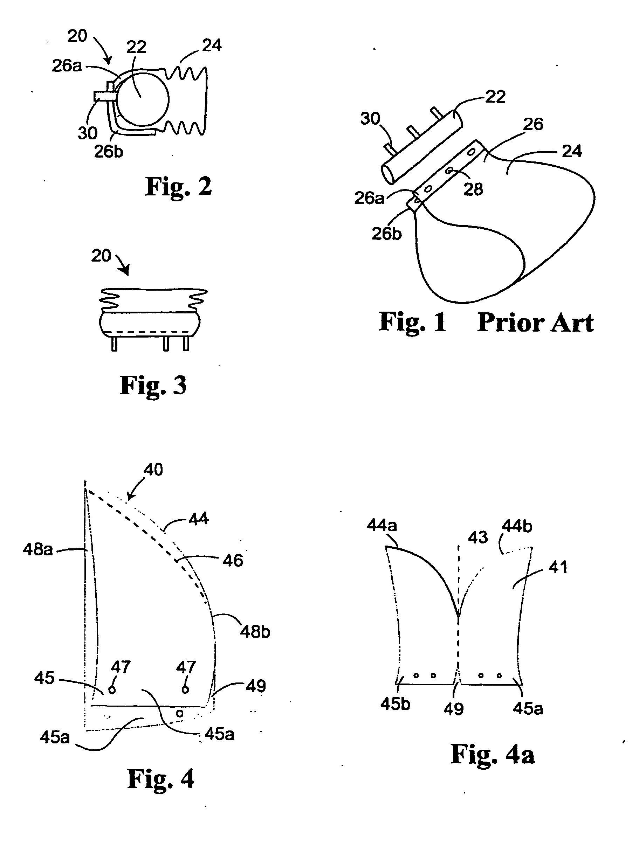

FIG. 1 shows the major portions of a prior art airbag module 20, namely an airbag inflator 22 and an airbag 24. In the illustrated embodiment the airbag 24 includes a plurality of opposingly positioned flaps 26a, 26b located in the neck or inlet portion 26 of the airbag. These flaps include mounting openings 28 for receipt of an appropriate fastener as known in the art. The flaps are not critical to the present invention. The inflator is inserted within the neck 26 of the airbag and the flaps overlapped about mounting studs 30, which extend from the inflator 22. As is also known in the art, the studs can extend directly from a housing or alternatively from a hollow manifold, which is slipped about the inflator. While not shown, the inflator and airbag can be placed within a housing.

FIGs. 2 and 3 diagrammatically illustrate the airbag 24 folded about the (cylindrical) inflator 22. The airbag can, as known in the art, be maintained in this orientation, prior to inflation, by enveloping the folded airbag by a material panel or sock that is easily torn as the airbag inflates such as a perforated panel of Tyvek, paper or other material.
FIG. 3 shows a top view of the airbag module 20 shown in FIG. 2.

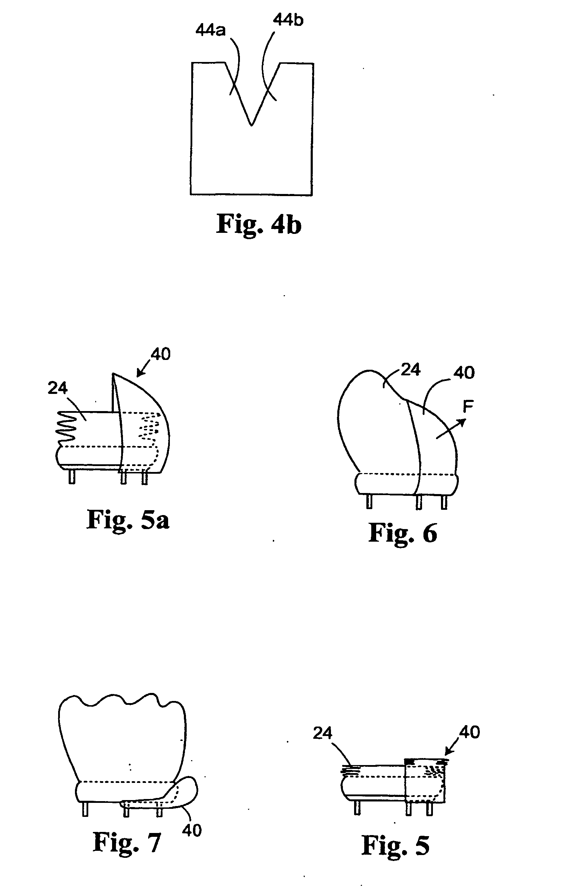

As is known in the art, when inflation gas is uniformly input or delivered into the inlet or neck of the airbag from a source of inflation gas, the airbag will generally tend to inflate in a symmetric manner. However, in the present invention, it is desirable to force the airbag to inflate in a non-symmetric manner primarily to try and protect the out-of-position occupant. This asymmetric inflation is accomplished by enveloping the folded airbag by an external tether or hood 40 (see FIG. 4), which only partially envelops the folded airbag as shown in FIGs. 5 and 5a.

FIG. 5 shows the tether or hood 40 folded atop the folded airbag. The external tether in FIG. 4 is dome shaped having a top that extends into the path of the inflating airbag and which is angled to encourage the airbag to change its direction of inflation. The tether 40 preferably includes an open side 48a and closed side 48b opposite the open side 48a. In the preferred embodiment the top is angled relative to the direction of inflation of the airbag. In the preferred embodiment the top is arcuately shaped and extends or tapers in a rearward direction toward the other side 48b, which in the preferred embodiment is at least partially closed.

In a first embodiment the tether 40 is formed by folding a single piece of material such as panel 41, also shown in FIG. 4a, about a centerline 43. The panel 41, which can be formed of the same woven fabric as used for the airbag, is sewn along a seam 46 to join or close opposing top edges 44a, 44b forming the arcuately shaped top of the tether 40. The central portion of the panel 41 forms the closed side 48b of the tether. The top edges 44a, 44b, in the preferred embodiment, are curved or angled (inclined as shown in FIG. 4b). This curved or angled construction assists the inflating airbag in effectively pushing the tether 40 laterally away from the inflating airbag. The bottom 45 of the tether is formed by the bottom halves of flaps 45a, 45b of the panel (realized after the panel 41 has been sewn together). The bottom halves 45a, 45b may include a plurality of mounting holes 47, positioned to correspond at least with some of the mounting openings 28 and some of the fasteners 30. The bottom halves of the tether are placed on selected fasteners and each bottom half can be placed in overlapping relationship that effectively encloses the bottom portion of the tether 40.

The tether can be made using two smaller panels, each of which would resemble one-half of the panel 41 fully separated along the centerline. If two half-panels were used, the seam 46 (see phantom line) would extend from the top 44 along the sides 48b of the two half-panels. Further, in an alternate embodiment of the invention the opposite side 48b of the tether 40 can also be open or partially open as shown for example by slit 49, which can extend along the length of side 48b.

FIG. 5 shows the tether 40 positioned about the folded airbag 24. The asymmetric positioning of the tether 40 relative to the folded airbag 24 is now more apparent from FIG. 5a. The airbag 24 of FIG. 5a is shown in a folded state even though the tether 40 is shown in its fully extended position for purpose of illustration. The tether can be folded so that it lies upon the folded airbag as shown in FIG. 5, and the folded tether and airbag can be enveloped by a tearable sack or tearable material, such as a Tyvek®, to maintain the airbag and tether in a folded configuration.

FIG. 6 illustrates the initial moments of airbag inflation. In this state a sufficient amount of inflation gas has entered the airbag 24, causing the volume of the airbag to increase, and thereby causes the airbag to at least tear through or partially tear through the tearable sack or Tyvek layer of material, if used (the Tyvek layer is not shown). Additionally, the Tyvek layer is optional. As the airbag continues to inflate its volume further increases, and as the airbag increases in size it urges the tether to open and unfold from its folded state to the open hood-like shape, as shown in FIG. 5a, partially enveloping or at least able to envelop one side of the inflating airbag, causing the temporary entrapment of the airbag by the tether 40.

The enveloping, inhibiting, holding or cradling of one side of the inflating airbag temporarily inhibits the symmetric inflation of the airbag. As illustrated, the right-hand portion (with reference to the drawings) of the airbag will engage the inner surfaces of the partial tether 40. Until the tether is either torn or moved away, the right-hand portion of the airbag will not inflate. During the subsequent moments of inflation, the airbag will inflate generally away from restriction imposed by the tether 40. The airbag tends to inflate generally in a direction opposite the location of the partial tether 40 and expand or continue to expand about the open side 48a. As the airbag inflates the airbag itself will generate a reaction force F on the walls of the tether 40, as the unrestricted size of the airbag is greater than the size of the tether 40.

The airbag and tether can be made from woven nylon, pliable airbag material, which may or may not be covered by silicone or urethane. As the airbag continues to inflate, the airbag 24, in view of the reaction force F, will urge the tether to slide off of the airbag, encouraged by the interplay of the inflating airbag with the curved or angled configuration of the top of the tether 40, thereby disengaging the tether 40 from the airbag and permitting the airbag to continue to inflate more symmetrically. FIG. 7 illustrates the fully inflated airbag with the tether 40 pushed off to one side of the inflator.

## Claims

1. An air bag assembly (20) comprising:
an air bag (24) and an inflator (22) for inflating the air bag and a means (40) for causing the air bag to inflate in an asymmetric manner, said means being operatively disengageable from the airbag, **characterized in that** said means (40) includes a hood or tether (40) configured to partially envelope the folded airbag in order to interact with one side of the inflating airbag to thereby inhibit the inflation of this one side of the airbag and to be pushed off from the airbag as the airbag continues to inflate.

2. An airbag assembly as defined in Claim 1 wherein said means (40) for causing the airbag to inflate in an asymmetric manner initially receives a portion of the airbag thereby slowing the speed of the received portion of the airbag relative to the speed of that portion of the airbag not received by said means.

3. An.airbag assembly as defined in Claim 2 wherein the size of said means (40) for causing the airbag to inflate in an asymmetric manner is relatively smaller than the size of the inflated airbag.

4. An airbag assembly as defined in any of Claims 1 - 3 wherein said means (40) for causing the airbag to inflate in an asymmetric manner has an open side and a top which is angled relative to a forward direction of inflation of the airbag to encourage disengagement of the hood or tether from the airbag as the airbag inflates.

5. An airbag assembly as defined in Claim 4 wherein said means (40) for causing the airbag to inflate in an asymmetric manner angles or tapers rearward relative to the direction of inflation of the airbag.

6. An airbag assembly as defined in any of Claims 1 - 5 wherein said means (40) for causing the airbag to inflate in an asymmetric manner includes an open side facing a portion of the airbag to encourage disengagement of the means (40) for.causing the airbag to inflate in an asymmetric manner from the airbag as the airbag inflates.

## Patentansprüche

1. Airbagbaugruppe (20), die folgendes umfaßt:
einen Airbag (24) und eine Aufblasvorrichtung (22) zum Aufblasen des Airbags und ein Mittel (40), um zu bewirken, daß sich der Airbag auf eine asymmetrische Weise aufbläst, wobei das Mittel wirksam von dem Airbag getrennt werden kann, **dadurch gekennzeichnet, daß** das Mittel (40) eine Haube oder Bewegungsbegrenzungseinrichtung (40) einschließt, dafür konfiguriert, den gefalteten Airbag teilweise zu umhüllen, um mit einer Seite des sich aufblasenden Airbags in Wechselwirkung zu treten, um **dadurch** das Aufblasen dieser einen Seite des Airbags zu hemmen, und vom Airbag weggestoßen zu werden, wenn sich der Airbag weiter aufbläst.

2. Airbagbaugruppe nach Anspruch 1, bei dem das Mittel (40), um zu bewirken, daß sich der Airbag auf eine asymmetrische Weise aufbläst, anfangs einen Abschnitt des Airbags aufnimmt, wodurch es die Geschwindigkeit des aufgenommenen Abschnitts des Airbags im Verhältnis zur Geschwindigkeit desjenigen Abschnitts des Airbags, der nicht durch das Mittel aufgenommen wird, verlangsamt.

3. Airbagbaugruppe nach Anspruch 2, bei dem die Größe des Mittels (40), um zu bewirken, daß sich der Airbag auf eine asymmetrische Weise aufbläst, verhältnismäßig kleiner ist als die Größe des aufgeblasenen Airbags.

4. Airbagbaugruppe nach einem der Ansprüche 1-3, bei dem das Mittel (40), um zu bewirken, daß sich der Airbag auf eine asymmetrische Weise aufbläst, eine offenen Seite und einen Oberteil hat, der im Verhältnis zu einer Vorwärts-Aufblasrichtung des Airbags abgewinkelt ist, um ein Trennen der Haube oder Bewegungsbegrenzungseinrichtung vom Airbag zu erleichtern, wenn sich der Airbag aufbläst.

5. Airbagbaugruppe nach Anspruch 4, bei dem das Mittel (40), um zu bewirken, daß sich der Airbag auf eine asymmetrische Weise aufbläst, sich im Verhältnis zur Aufblasrichtung des Airbags nach hinten abwinkelt oder veujüngt.

6. Airbagbaugruppe nach einem der Ansprüche 1-5, bei dem das Mittel (40), um zu bewirken, daß sich der Airbag auf eine asymmetrische Weise aufbläst, eine offene Seite einschließt, die zu einem Abschnitt des Airbags zeigt, um ein Trennen des Mittels (40), um zu bewirken, daß sich der Airbag auf eine asymmetrische Weise aufbläst, vom Airbag zu erleichtern, wenn sich der Airbag aufbläst.

## Revendications

1. Assemblage de coussin d'air (20), comprenant:
un coussin d'air (24) et un dispositif de gonflement (22) pour gonfler le coussin d'air et un moyen (40) pour entraîner le gonflement du coussin d'air de manière asymétrique, ledit moyen pouvant être dégagé en service du coussin d'air, **caractérisé en ce que** ledit moyen (40) englobe un capot ou une sangle d'attache (40) destiné à envelopper partiellement le coussin d'air plié en vue de coopérer avec un côté du coussin d'air en cours de gonflement, pour empêcher ainsi le gonflement de ce côté du coussin d'air, et à être repoussé du coussin d'air lors de la poursuite du gonflement du coussin d'air.

2. Assemblage de coussin d'air selon la revendication 1, dans lequel ledit moyen (40) destiné à entraîner un gonflement asymétrique du coussin d'air reçoit initialement une partie du coussin d'air, ralentissant ainsi la vitesse de la partie reçue du coussin d'air par rapport à la vitesse de la partie du coussin d'air non reçue par ledit moyen.

3. Assemblage de coussin d'air selon la revendication 2, dans lequel la taille dudit moyen (40) destiné à entraîner un gonflement asymétrique du coussin d'air est relativement plus petite que la taille du coussin d'air gonflé.

4. Assemblage de coussin d'air selon l'une quelconque des revendications 1 à 3, dans lequel ledit moyen (40) destiné à entraîner un gonflement asymétrique du coussin d'air comporte un côté ouvert et une partie supérieure inclinée par rapport à une direction avant du gonflement du coussin d'air pour faciliter le dégagement du capot ou de la sangle d'attache du coussin d'air lors du gonflement du coussin d'air.

5. Assemblage de coussin d'air selon la revendication 4, dans lequel ledit moyen (40) destiné à entraîner un gonflement asymétrique du coussin d'air est incliné ou effilé vers l'arrière par rapport à la direction de gonflement du coussin d'air.

6. Assemblage de coussin d'air selon l'une quelconque des revendications 1 à 5, dans lequel ledit moyen (40) destiné à entraîner un gonflement asymétrique du coussin d'air englobe un côté ouvert orienté vers une partie du coussin d'air pour faciliter le dégagement du moyen (40) destiné à entraîner un gonflement asymétrique du coussin d'air du coussin d'air lors du gonflement du coussin d'air.
